Europäisches Patentamt

European Patent Office

Office européen des brevets

(11) Numéro de publication: **0 311 519 B1**

(12) **FASCICULE DE BREVET EUROPEEN**

(45) Date de publication de fascicule du brevet: **26.08.92** (51) Int. Cl.⁵: **A01G 9/10**, A01G 9/02

(21) Numéro de dépôt: **88402525.5**

(22) Date de dépôt: **05.10.88**

(54) **Conteneur tubulaire pour la culture de plants et procédé et dispositif pour sa formation.**

(30) Priorité: **06.10.87 FR 8713798**
**28.06.88 FR 8808672**

(43) Date de publication de la demande:
**12.04.89 Bulletin 89/15**

(45) Mention de la délivrance du brevet:
**26.08.92 Bulletin 92/35**

(84) Etats contractants désignés:
**AT BE DE ES FR GB GR IT NL**

(56) Documents cités:
EP-A- 0 026 049
FR-A- 653 594
FR-A- 1 593 506
FR-A- 2 109 365
US-A- 2 242 149

(73) Titulaire: **GROUPEMENT AGRICOLE D'EXPLOI-
TATION EN COMMUN (G.A.E.C.) DES PEPI-
NIERES ALPES-PROVENCE
Saint-Laurent-du-Cros
F-05500 Saint-Bonnet-en-Champsaur(FR)**

(72) Inventeur: **Robin, Bruno
Saint Laurent du Cros
F-05500 Saint-Bonnet en Champsaur(FR)**

(74) Mandataire: **Casalonga, Axel et al
BUREAU D.A. CASALONGA - JOSSE Morassistrasse 8
W-8000 München 5(DE)**

# Description

La présente invention se rapporte à un conteneur tubulaire pour la culture de plants et plus particulièrement pour la culture de plants d'arbres forestiers ou ornementaux ainsi qu'un procédé et un dispositif pour sa formation.

On voit depuis plusieurs années, une évolution importante du nombre de plants notamment d'arbres forestiers, ornementaux ou de vignes élevés en pépinière dans des conteneurs pour en être ensuite extraits pour être transplantés sur leur emplacement définitif de croissance. Cette technique présente en effet de nombreux avantages. Par rapport aux plants élevés à racines nues, on limite ainsi considérablement les risques de dessèchement du système racinaire des plants pendant les différentes opérations d'expédition de la pépinière, de transport et de manutention sur les chantiers avant la plantation. Le système racinaire du plant est amené intact avec une réserve de terreau et d'humidité sur son lieu de plantation et on a ainsi un redémarrage du plant idéal. Les conteneurs actuellement connus ne permettent pas de sortir la motte intacte lors du démoulage. Souvent celle-ci se brise et l'on transplante le plant à racines nues. Ceci est souvent dû à la forme des conteneurs utilisés.

Le brevet FR-A-653 594 décrit, non pas un conteneur tubulaire pour la culture de plants, mais un dispositif de protection d'arbres ou de plantes. Ce dispositif connu, réalisé à partir d'une feuille dont les bords d'extrémité circonférentiels forment des crochets s'engageant l'un dans l'autre et agissant circonférenciellement, ne pourrait pas être ouvert s'il était rempli de terre car il faudrait alors comprimer fortement et détériorer la motte de terre et inévitablement endommager les racines du plant.

Le brevet US-A-2 242 149 décrit un conteneur tubulaire pour la culture de plants formé à partir d'une feuille dont l'un des bords d'extrémité circonférentiels est muni d'un crochet qui est destiné à être engagé circonférenciellement puis longitudinalement dans une fente ménagée dans l'autre partie d'extrémité. Ce conteneur est conique de manière à pouvoir extraire la motte de terre. Pour décrocher les bords d'extrémité de ce conteneur connu, il faudrait effectuer un mouvement inverse et donc effectuer un glissement longitudinal puis glissement circonférenciel des parties d'extrémité périphériques en comprimant la motte la terre et donc en détruisant au moins partiellement les racines du plant.

Le brevet US-A-2 827 217 décrit un réceptacle notamment pour la culture de plants qui comprend une feuille périphérique et une pièce supplémentaire constituée par une rondelle intérieure qui sert au maintien de la feuille périphérique et à la fixation de ses bords d'extrémité périphériques. Ce réceptacle comprend donc plusieurs pièces à assembler et présente donc une utilisation compliquée.

Le brevet EP-A-0 026 049 décrit une boîte dans laquelle deux parois adjacentes sont reliées par une nervure d'angle de section en forme de V dont les flancs viennent en appui lorsque la boîte est formée.

Le brevet FR-A-2 109 365 décrit une boîte d'emballage qui présente des parties s'emboîtant. Cet emballage est maintenu en position montée grâce à des crochets qui s'engagent dans des évidements par déplacement dans le sens circonférentiel.

Le brevet FR-A-1 593 506 décrit une machine comprenant un noyau et des rouleaux périphériques pour la confection d'un tube par pliage d'une feuille dont les parties d'extrémité plates amenées l'une sur l'autre sont collées.

Un objet de la présente invention consiste en la fourniture d'un conteneur dont la confection, à partir d'une pièce de base préfabriquée, est particulièrement simple à réaliser.

Un autre objet de la présente invention consiste en la fourniture d'un conteneur dont la structure permet le dégagement de la motte de terre sans endommager cette dernière.

Un autre objet de la présente invention consiste en la fourniture d'un conteneur réutilisable.

Un autre objet de la présente invention consiste à fournir un conteneur dont le stockage avant emploi occupe un faible volume.

Un autre objet de la présente invention consiste à fournir un conteneur dont la structure permet d'éviter sinon d'atténuer la spiralisation des racines des plants lorsqu'elles atteignent ses parois.

Un autre objet de la présente invention consiste en un procédé de formation d'un conteneur tubulaire à partir d'une pièce de base préfabriquée.

Un autre objet de la présente invention consiste en un dispositif pour la formation d'un conteneur tubulaire à partir d'une pièce de base préfabriquée.

Tel qu'il est revendiqué, le conteneur tubulaire de l'invention, notamment pour la culture de plants, comprend une feuille pliée de manière à former un tube et maintenue sous cette forme grâce à des parties complémentaires qui s'emboîtent ou s'encastrent et qui s'étendent au long de la hauteur du tube. Selon l'invention, les deux parties d'extrémité circonférentielles de ladite feuille se recouvrent et présentent, sur leurs faces respectivement des parties de fixation en saillie de section en forme de U ou d'oméga conformées dans le sens de l'épaisseur de la feuille et du même côté, ces parties en saillie étant de formes complémentaires et étant emboîtées ou encastrées, leurs flancs homologues étant en contact et leurs axes de symétrie étant sensiblement perpendiculaires à la paroi du tube.

Ainsi, l'emboîtement de ces parties en saillie formées sur les faces des parties d'extrémité circonférentielles de la feuille se réalise par rapprochement de ces parties d'extrémité et leur désemboîtement peut se réaliser par éloignement de ces parties d'extrémité. De préférence, cet emboîtement se réalise par pressions opposées sur lesdites parties d'extrémité et le désemboîtement notamment par traction vers l'extérieur sur la partie d'extrémité extérieure.

Selon l'invention, les parties en saillie peuvent être formées par des nervures(s) et rainure(s) de forme correspondante et s'emboîtant ou s'encastrant.

Selon l'invention, lesdites parties en saillie peuvent comprendre au moins des nervure(s) et rainure(s) s'étendant longitudinalement et s'emboîtant ou s'encastrant.

Selon l'invention, lesdites parties en saillie peuvent comprendre au moins des nervure(s) et rainure(s) s'étendant circonférentiellement et prévues au moins à l'une des extrémités dudit tube.

Le conteneur tubulaire selon l'invention peut comprendre une multiplicité de nervures longitudinales formées vers l'intérieur et réparties sur sa périphérie.

Selon l'invention, lesdites nervures longitudinales sont de section en forme de U.

Le conteneur tubulaire selon l'invention est de préférence de section transversale polygonale, ses faces présentant des nervures circonférentielles à leurs extrémités et des nervures longitudinales.

Selon l'invention, les zones longitudinales de jonction desdites faces constituent des nervures longitudinales formées vers l'extérieur.

Selon l'invention, lesdites parties d'extrémité de ladite feuille s'étendent circonférentiellement au-delà de leurs parties en saillie s'emboîtant.

Tel qu'elle est revendiquée, dans la feuille en matière plastique destinée à la confection d'un conteneur tubulaire notamment du conteneur tubulaire précité, qui présente des pans longitudinaux adjacents reliés par des nervures longitudinales de jonction en saillie conformées dans le sens de l'épaisseur de la feuille, chaque pan présente au moins une nervure longitudinale en saillie et des nervures transversales en saillie à ses extrémités, conformées dans le sens de l'épaisseur de la feuille à l'opposé desdites nervures de jonction, les nervures de l'un des pans d'extrémité de ladite feuille et les nervures de son autre pan d'extrémité étant de section en forme de U ou d'Oméga, les nervures de l'un desdits pans d'extrémité étant complémentaires des rainures déterminées par les nervures de l'autre pan d'extrémité afin de pouvoir s'emboîter ou s'encastrer les unes dans les autres lorsque la feuille est pliée en formant un tube.

Selon l'invention, les nervures longitudinales desdits pans d'extrémité sont formées à distance des bords longitudinaux de ces derniers.

La feuille selon l'invention est de préférence rectangulaire.

Tel qu'il est revendiqué, le procédé de formation, à partir d'une feuille, d'un conteneur tubulaire présentant des parties d'extrémité circonférentielles se recouvrant, dans lequel on fait passer ces parties entre un rouleau presseur et un noyau, notamment pour la formation du conteneur tubulaire précité, consiste à enrouler ladite feuille autour du noyau, à amener en recouvrement les parties correspondantes de section en forme de U ou d'Oméga desdites parties d'extrémité de cette feuille et conformées en saillie dans le sens de l'épaisseur de cette dernière et consiste à faire glisser la feuille ainsi enroulée le long dudit noyau pour engager et faire passer longitudinalement et dans le sens de leur épaisseur ces parties d'extrémité dans l'espace formé entre le rouleau presseur et le noyau, cet espace étant tel que lors de ce passage, lesdites parties en saillie s'emboîtent ou s'encastrent les unes dans les autres.

Le procédé selon l'invention consiste de préférence à faire passer ladite feuille enroulée dans un espace annulaire ménagé entre ledit noyau et des rouleaux disposés à la périphérie de ce dernier.

Le procédé selon l'invention consiste de préférence à former au moins une nervure longitudinale s'étendant vers l'extérieur de ladite feuille lorsque cette dernière passe entre les bords adjacents d'au moins deux rouleaux adjacents.

Tel qu'il est revendiqué, le dispositif destiné à la fabrication d'un conteneur tubulaire à partir d'une feuille dont les parties d'extrémité présentent des parties en saillie destinées à s'emboîter ou s'encastrer dans le sens de l'épaisseur de cette feuille, notamment pour la mise en oeuvre du procédé précité comprend un noyau longitudinal monté en porte-à-faux, des rouleaux dont les axes s'étendent perpendiculairement audit noyau et qui sont situés latéralement et à une distance de ce dernier de manière à former un espace annulaire et des moyens d'entraînement en rotation desdits rouleaux et est tel que ledit noyau présente une partie en amont desdits rouleaux, de section constante et une partie aval d'extrémité, engagée entre les rouleaux précités, de forme tronconique.

Selon l'invention, ledit noyau est de préférence de section polygonale, des rouleaux étant respectivement prévus à distance d'au moins certaines de ses faces.

Selon l'invention, deux rouleaux adjacents présentent des bords adjacents espacés.

Le dispositif selon l'invention comprend de préférence un noyau de section rectangulaire ou carré et quatre rouleaux prévus à distance de ses faces pour ménager un espace annulaire, lesdits moyens d'entraînement entraînant en rotation en sens opposé deux rouleaux opposés.

Le dispositif selon l'invention peut en outre comprendre un tapis d'évacuation s'étendant perpendiculairement audit noyau, sur lequel se dépose le conteneur tubulaire formé.

La présente invention sera mieux comprise à l'étude d'un conteneur tubulaire pour la culture de plants et d'un dispositif pour sa formation, décrits à titre d'exemples non limitatifs et illustrés par le dessin sur lequel :

- la figure 1 représente, en plan, une feuille destinée à la confection d'un conteneur tubulaire pour la culture de plants selon la présente invention ;
- la figure 2 représente une coupe transversale selon II-II de la feuille représentée sur la figure 1 ;
- la figure 3 représente une coupe transversale du conteneur tubulaire obtenu à partir de la feuille représentée sur les figures 1 et et 2 :
- la figure 4 représente le conteneur tubulaire en coupe longitudinale par deux plans décalés selon IV-IV de la figure 3 ;
- la figure 5 représente en coupe transversale le conteneur tubulaire en position ouverte.
- la figure 6 représente une vue longitudinale en élévation, partiellement en coupe, d'un dispositif selon la présente invention pour la formation du conteneur précité ;
- la figure 7 représente une vue transversale, partiellement en coupe, du dispositif de la figure 6, le conteneur étant engagé dans ce dispositif ;
- et la figure 8 représente une coupe transversale, côté alimentation, du dispositif représenté sur la figure 6, le conteneur en coupe transversale étant en position intermédiaire de formation.

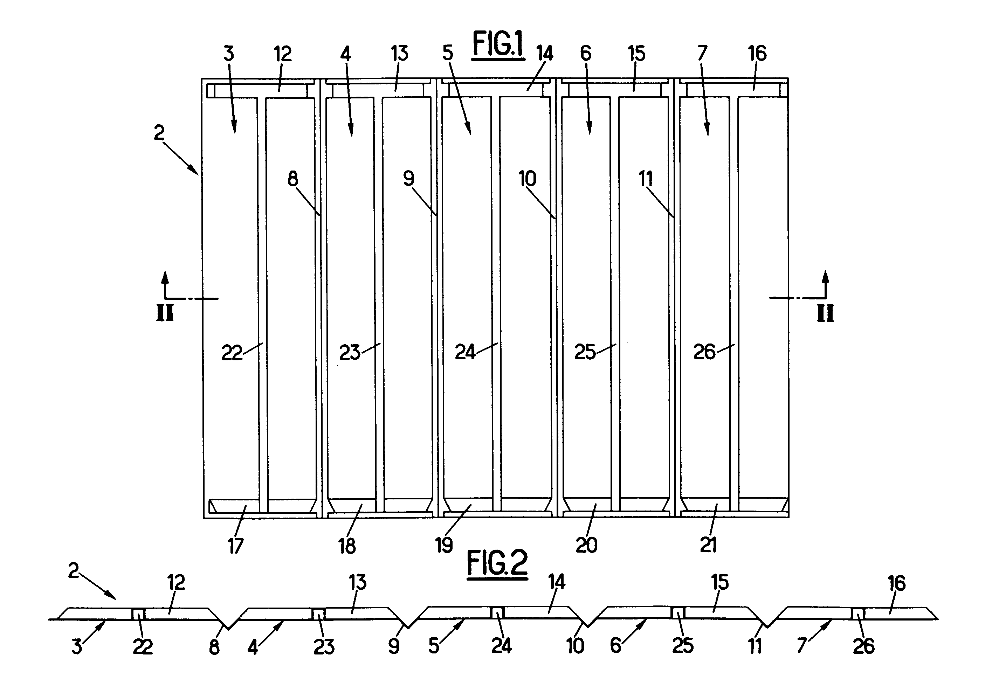

Le conteneur tubulaire pour la culture de plants représenté sur les figures 1 à 5 et repéré d'une manière générale par la référence 1 peut être confectionné à partir d'une feuille rectangulaire préformée repérée d'une manière générale par la référence 2 et représentée sur les figures 1 et 2, cette feuille étant de préférence en une matière plastique semi-rigide de faible épaisseur.

Cette feuille 2 comprend cinq pans longitudinaux rectangulaires 3, 4, 5, 6 et 7 adjacents qui sont respectivement reliés par des nervures longitudinales en saillie de section en forme de V et repérées d'une manière générale par les références 8, 9, 10, 11 qui sont formées d'un même côté.

Les pans 3 à 7 présentent respectivement, à l'une de leurs extrémités des nervures transversales en saillie 12, 13, 14, 15 et 16, de section longitudinale en forme de U et, à leur autre extrémité, des nervures transversales en saillie 17, 18, 19, 20 et 21 qui sont de section longitudinale en forme de V, ces nervures 12 à 21 étant formées à l'opposé des nervures longitudinales 8 à 11. Ces nervures transversales 12 et 21 s'étendent sur la largeur des pans 3 et 7 et leurs extrémités sont inclinées dans le prolongement des nervures longitudinales de section en forme de V 8 à 11.

De plus, les pans 3 à 7 présentent respectivement, en leur milieu, des nervures longitudinales en saillie 22, 23, 24, 25 et 26 qui sont également formées à l'opposé des nervures longitudinales 8 à 11, du même côté que les nervures 12 à 21, ces nervures longitudinales 22 à 26 s'étendant sur toute la longueur des pans 3 à 7 et rejoignant leurs nervures transversales d'extrémité. Ces nervures longitudinales 22 à 26 sont de section transversale en forme de U et présentent la même hauteur que les nervures transversales 12 à 21, les nervures 22 et 26 étant de préférence de section en forme d'oméga.

On peut observer que la largeur des nervures 12 à 26 est faible par rapport à la largeur ou la longueur des pans 3 à 7, leur épaisseur étant également relativement faible.

De manière particulièrement avantageuse, la feuille 2 décrite ci-dessus peut être fabriquée par thermoformage.

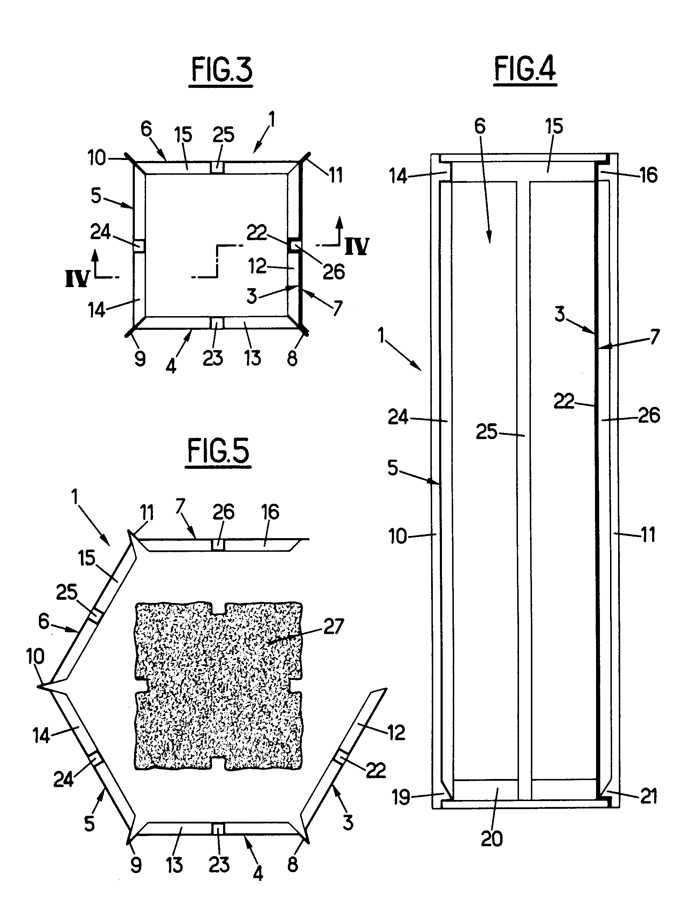

A partir de la feuille 2 à cinq pans 3 et 7 et par déformation de cette dernière, on peut confectionner manuellement le conteneur tubulaire 1 de section carrée représenté plus particulièrement sur les figures 3 et 4 de la manière suivante.

On plie les uns par rapport aux autres les pans 3 à 7 de la feuille 2 en les faisant pivoter autour des arêtes des nervures longitudinales de jonction 8 à 11 de manière à former un tube, les nervures 8 à 11 se refermant et les nervures transversales 12 à 21 et les nervures longitudinales 22 à 26 s'étendant en saillie vers l'intérieur de ce tube. On amène le pan longitudinal d'extrémité 7 en recouvrement de l'autre pan d'extrémité 3.

Les rainures déterminées par les nervures 12, 17 et 22 du pan d'extrémité 3 et les nervures 16, 21, 26 du pan d'extrémité 7 sont de forme complémentaire et la nervure longitudinale 16 du pan d'extrémité 7 est dimensionnée de manière à pouvoir pénétrer par emboîtement ou encastrement dans la rainure déterminée par la nervure 22 du pan d'extrémité 3.

En rapprochant et en exerçant une pression de manière opposée sur les pans 3 et 7, on engage les nervures 16, 21 et 26 du pan d'extrémité 7 placé à l'extérieur dans les rainures déterminées par les nervures 12, 17 et 22 du pan d'extrémité 3, les nervures longitudinales 22 et 26 de section en oméga assurant par emboitement la fixation des pans 3 et 7.

Le conteneur tubulaire 1, dans l'exemple de section carrée, est alors construit et est maintenu par simple emboîtement des rainures et nervures de forme correspondante des pans d'extrémité 3 et 7 amenés en recouvrement.

On peut observer que le conteneur tubulaire 1 ainsi formé présente quatre faces qui sont raidies circonférentiellement grâce aux nervures transversales d'extrémité 12 à 16 et 17 à 21 et raidies longitudinalement grâce aux nervures longitudinales de jonction 8 à 11 et aux nervures longitudinales médianes 22 à 26.

Le conteneur tubulaire 1 étant formé, on le place verticalement sur un support approprié de telle sorte que les nervures transversales ou circonférentielles 12 à 16 sont disposées en haut et les nervures transversales circonférentielles 17 à 21 sont placées en bas, ces dernières de section en forme de V présentant une face supérieure inclinée vers le bas et vers l'intérieur.

On remplit le conteneur tubulaire 1 de terreau approprié pour former une motte 27 et on y place une ou plusieurs graines ou y repiquer un jeune plant. On peut remarquer que les nervures longitudinales 22 et 26 encastrées assurent l'étanchéité périphérique du conteneur 1 et que les nervures 17 à 21 permettent le maintien de la motte lorsque le conteneur doit être déplacé, par exemple transporté sur le lieu de plantation.

Lors de la croissance du plant, la forme carrée du conteneur tubulaire 1 et les nervures intérieures longitudinales 22 à 26 contribuent au guidage vers le bas des racines afin d'éviter leur spiralisation. Le conteneur tubulaire 1 étant disposé par exemple sur un grillage de telle sorte que la partie inférieure de la motte de terre 27 est à l'air libre, lorsque les racines atteignent la partie inférieure en contact avec l'air, leur extrémité sèche et s'auto-cerne, favorisant ainsi la pousse de racines secondaires dans la motte 27.

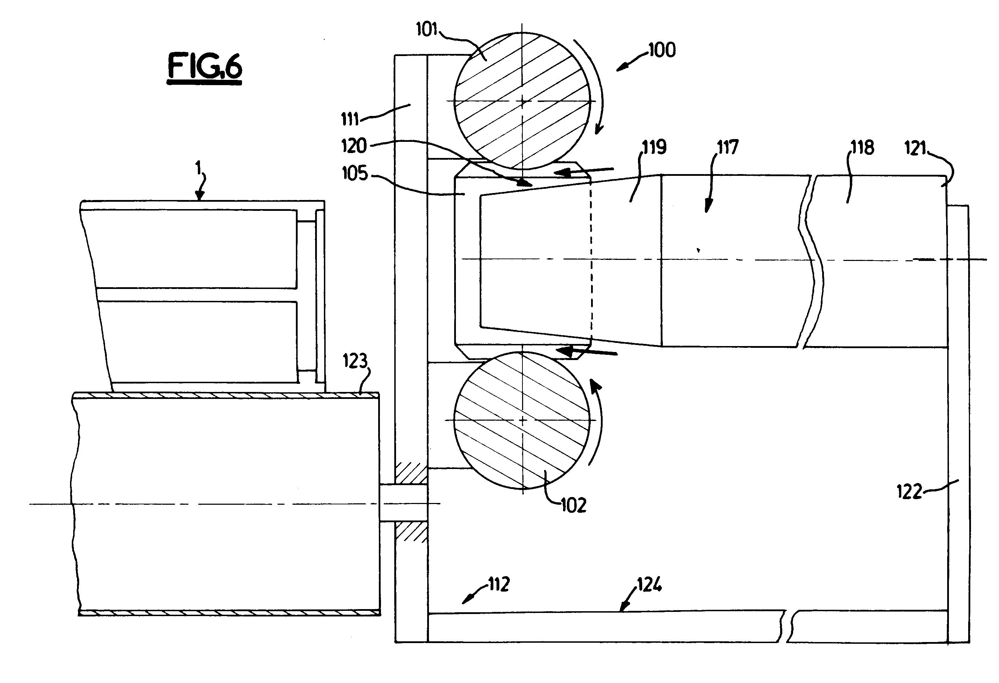

Lorsque la croissance du plant placé dans le conteneur tubulaire 1 est considérée comme suffisante, on transplante ce dernier en pleine terre, après extraction de la motte 27. Pour celà, on tire vers l'extérieur le bord périphérique longitudinal du pan d'extrémité 7, qui est situé à distance de sa nervure longitudinale 26, de manière à éloigner et séparer, à l'inverse de l'opération précédente, le pan 7 du pan 3 et on déploie la feuille 2 à l'opposé de l'opération précédente, comme visible sur la figure 5.

Lors de cette opération d'ouverture du conteneur tubulaire 1, la motte 27 n'est quasiment pas endommagée et les racines du plant restent intactes.

Le conteneur tubulaire 1 ainsi vidé de la motte 27 peut de nouveau être construit et utilisé pour la croissance en motte d'un autre plant.

Il est à noter que le conteneur tubulaire 1 décrit ci-dessus, confectioné à partir de la feuille 2 peut être stocké dans un faible volume car il suffit de stocker les feuilles 2 et de ne confectionner le conteneur tubulaire 1 qu'en cas de besoin.

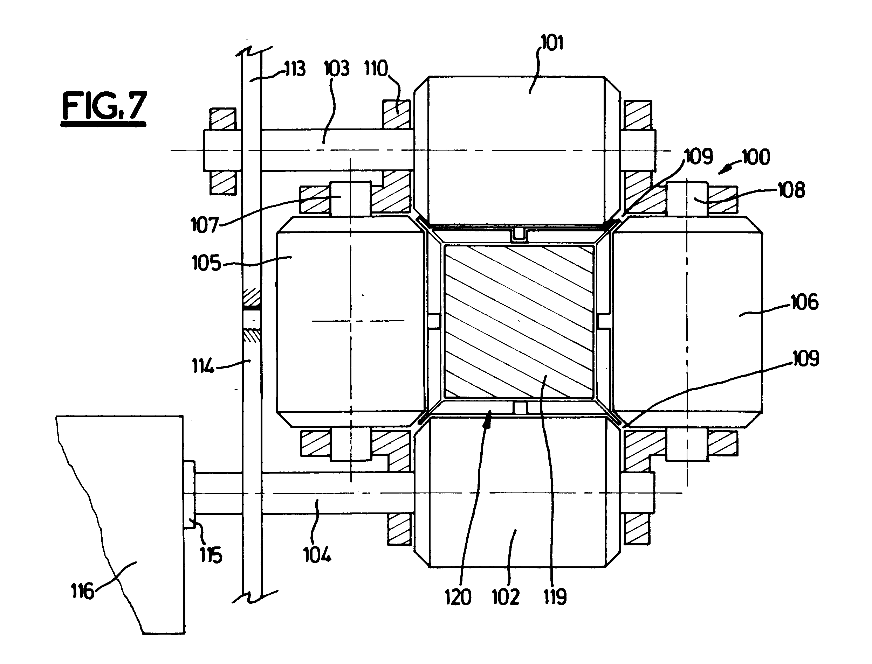

En se reportant maintenant aux figures 6 à 8, on va décrire un dispositif de formation du conteneur tubulaire 1 précité. Bien que ce conteneur 1 soit confectionnable manuellement, ce dispositif de formation permet d'augmenter considérablement les cadences.

Le dispositif de formation du conteneur tubulaire 1, repéré d'une manière générale par la référence 100, comprend une paire de rouleaux cylindriques superposés 101 et 102 à axes 103 et 104 horizontaux et parallèles ainsi qu'une paire de rouleaux cylindriques 105 et 106 à axes 107 et 108 qui s'étendent verticalement, dans le même plan que les axes 103 et 104 des rouleaux 101 et 102. Ces rouleaux 101, 102, 105 et 106 sont de même diamètre et de même longueur et sont disposés de manière à déterminer entre eux un passage carré. En outre, leurs bords d'extrémité mutuellement adjacents présentent des chanfreins à 45° qui déterminent quatre espaces 109 à 45° ouverts vers l'extérieur.

Les axes 103, 104, 107 et 108 des rouleaux précités sont montés, de part et d'autre de ces derniers, sur quatre profilés en L qui sont fixés latéralement aux rouleaux verticaux 105 et 106 sur des plaques verticales 111 d'un châssis 112.

Les rouleaux verticaux 105 et 106 sont montés fous tandis que les axes 103 et 104 des rouleaux horizontaux 101 et 102 portent de pignons 113 et 114 qui sont en prise, l'axe 104 étant relié à l'arbre de sortie 115 d'un moto-réducteur 116 d'entraînement porté par le châssis 112, de telle sorte que les rouleaux 101 et 102 tournent en sens opposé.

Le dispositif 100 comprend en outre un noyau 117 qui s'étend horizontalement, perpendiculairement au plan des rouleaux 101, 102, 105 et 106. Ce noyau 117 est de section transversale carrée et présente une partie amont 118 de section constante et une partie aval d'extrémité 119 de forme tronconique dont la partie d'extrémité est engagée dans l'espace carré délimité par les rouleaux 101, 102, 105 et 106, de manière à déterminer entre ces rouleaux et la partie d'extrémité 119 du noyau 117, un espace annulaire 120 d'épaisseur sensiblement constante. Cette partie avant 119 constitue un contre-appui au regard des rouleaux précités. La partie arrière 121 du noyau 117 opposée à sa partie d'extrémité 119, est portée par un bras vertical 122 qui s'étend vers le bas et qui est porté par le châssis 112, de telle sorte que ce noyau 117 est monté en porte-à-faux, sa partie d'extrémité 119 étant libre.

Comme on peut le voir sur la figure 6, le dispositif 100 comprend en outre, à l'opposé du noyau 117, un tapis roulant horizontal 123 qui s'étend en avant des rouleaux précités et parallèlement au plan de ces derniers, ce tapis roulant étant disposé à un niveau légèrement inférieur à la partie inférieure de l'espace annulaire 120.

En dessous et à distance du noyau 117, le châssis 112 présente une plate-forme 123.

A l'aide de la machine 100 décrite ci-dessus, un opérateur peut former le conteneur tubulaire 1 à partir de la feuille préformée 2.

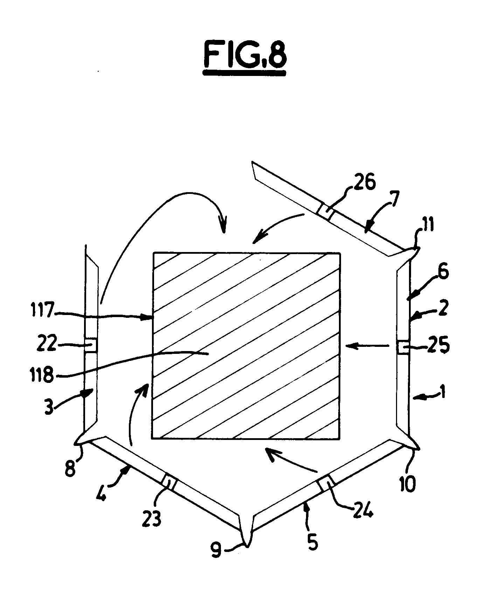

Comme le montre la figure 8, l'opérateur placé en arrière du noyau 117 enroule la feuille 2 autour de la partie arrière 118 de ce noyau 117 de telle sorte que ses pans 4, 5, 6 et 7 viennent en appui sur les quatre faces de ce noyau et que le pan d'extrémité 3 vienne recouvrir le pan d'extrémité 7, la nervure 22 du pan 3 étant au-dessus de la nervure 26 du pan 7.

L'opérateur glisse alors vers l'avant la feuille 2 enroulée autour du noyau 117 de manière à engager son extrémité dans l'espace annulaire 120 formé entre la partie d'extrémité tronconique 118 du noyau 117 et les quatre rouleaux précités.

Les rouleaux 101 et 102 étant entraînés en rotation par le moteur 116, ces derniers entraînent la feuille 2 vers l'avant. Au cours de ce mouvement, la nervure 22 du pan 3 s'emboite ou s'encastre progressivement dans la partie extérieure de la nervure 26 et les nervures longitudinales extérieures 8, 9, 10 et 11 sont légèrement écrasées dans les espaces 109 ménagés entre les bords chanfreinés adjacents des rouleaux précités.

Après avoir traversé l'espace annulaire 120, le conteneur tubulaire 1 formé se dépose sur le tapis roulant 123 et est évacué transversalement comme le montre la figure 6.

Bien entendu, les autres nervures prévues sur le pan 3 s'engagent également dans la partie extérieure de nervures correspondantes du pan 7.

L'espace annulaire 120 est dimensionné en correspondance avec l'épaisseur générale des pans de la feuille 2 et les quatre espaces 109 prévus entre les bords des rouleaux précités sont dimensionnés de telle sorte que les faces du conteneur formé 1 sont planes.

L'opérateur recommence les opérations décrites ci-dessus en prenant successivement, de part et d'autre du noyau 117, des feuilles 2 empilées sur la plate-forme 124 en dessous du noyau 117.

La présente invention ne se limite évidemment pas aux exemples ci-dessus décrits. On aurait pu en effet décrire un conteneur tubulaire de section différente par exemple de section polygonale à trois, cinq côtés ou plus, présentant un nombre de nervures longitudinales différent et plus généralement des parties en saillie de formes différentes. Le dispositif décrit peut évidemment être appliqué pour la formation de ces conteneurs de formes différentes, le nombre de rouleaux presseurs et la forme du noyau de préformation étant adaptés à ces formes.

**Revendications**

1. Conteneur tubulaire (1) notamment pour la culture de plants, comprenant une feuille (2) pliée de manière à former un tube et maintenue sous cette forme grâce à des parties complémentaires qui s'emboîtent ou s'encastrent et qui s'étendent au long de la hauteur du tube, caractérisé par le fait que les deux parties d'extrémité circonférentielles (3, 7) de ladite feuille se recouvrent et présentent, sur leurs faces respectivement des parties de fixation en saillie (22, 26) de section en forme de U ou d'oméga conformées dans le sens de l'épaisseur de la feuille et du même côté, ces parties en saillie étant de formes complémentaires et étant emboîtées ou encastrées, leurs flancs homologues étant en contact et leurs axes de symétrie étant sensiblement perpendiculaires à la paroi du tube.

2. Conteneur tubulaire selon la revendication 1, caractérisé par le fait que les parties en saillie sont formées par des nervure(s) et rainure(s) (22, 26) de forme correspondante et s'emboîtant ou s'encastrant.

3. Conteneur tubulaire selon l'une des revendications 1 et 2, caractérisé par le fait que lesdites parties en saillie comprennent au moins des nervure(s) et rainure(s) (22, 26) s'étendant longitudinalement et s'emboîtant ou s'encastrant.

4. Conteneur tubulaire selon l'une quelconque des revendications précédentes, caractérisé par le fait que lesdites parties en saillie comprennent au moins des nervure(s) et rainure(s) (12, 16) s'étendant circonférentiellement et prévues au moins à l'une des extrémités dudit tube.

5. Conteneur tubulaire selon l'une quelconque des revendications précédentes, caractérisé par le fait qu'il comprend une multiplicité de nervures longitudinales (8-11 ; 22-26) formées vers l'intérieur et réparties sur sa périphérie.

6. Conteneur tubulaire selon la revendication 5, caractérisé par le fait que lesdites nervures longitudinales (22-26) sont de section en forme de U.

7. Conteneur tubulaire selon l'une quelconque des revendications précédentes, caractérisé par le fait qu'il comprend, à sa partie inférieure, des parties en saillie (17-21) formées vers l'intérieur, dont la face supérieure est inclinée vers le bas et vers l'intérieur.

8. Conteneur tubulaire selon l'une quelconque des revendications précédentes, caractérisé par le fait qu'il est de section transversale polygonale, ses faces présentant des nervures circonférentielles (12-16 ; 17-21) à leurs extrémités et des nervures longitudinales (22-26).

9. Conteneur tubulaire selon la revendication 8, caractérisé par le fait que les zones longitudinales de jonction desdites faces constituent des nervures longitudinales (8-11) formées vers l'extérieur.

10. Conteneur tubulaire selon l'une qelconque des revendications précédentes, caractérisé par le fait que lesdites parties d'extrémité de ladite feuille s'étendent circonférentiellement au-delà de leurs parties en saillie (22, 26) s'emboîtant.

11. Feuille en matière plastique destinée à la confection d'un conteneur tubulaire notamment d'un conteneur tubulaire selon l'une quelconque des revendications précédentes, présentant des pans longitudinaux (3-7) adjacents reliés par des nervures longitudinales de jonction en saillie (8-11) conformées dans le sens de l'épaisseur de la feuille, caractérisé par le fait que chaque pan présente au moins une nervure longitudinale en saillie (22-26) et des nervures transversales en saillie (12-21) à ses extrémités, conformées dans le sens de l'épaisseur de la feuille à l'opposé desdites nervures de jonction, les nervures (16, 21, 26) de l'un des pans d'extrémité (3, 7) de ladite feuille (2) et les nervures (12, 17, 22) de son autre pan d'extrémité étant de section en forme de U ou d'Oméga, les nervures (16, 21, 26) de l'un desdits pans d'extrémité (7) étant complémentaires des rainures (12, 17, 22) déterminées par les nervures de l'autre pan d'extrémité (3) afin de pouvoir s'emboîter ou s'encastrer les unes dans les autres lorsque la feuille est pliée en formant un tube.

12. Feuille selon la revendication 11, caractérisée par le fait que les nervures longitudinales (22, 26) desdits pans d'extrémité (3, 7) sont formées à distance des bords longitudinaux de ces derniers.

13. Feuille selon la revendication 11, caractérisée par le fait qu'elle est rectangulaire.

14. Procédé de formation, à partir d'une feuille (2), d'un conteneur tubulaire (1) présentant des parties d'extrémité circonférentielles (3, 7) se recouvrant, dans lequel on fait passer ces parties entre un rouleau presseur (101) et un noyau (119), pour la formation du conteneur tubulaire selon l'une quelconque des revendications précédentes, caractérisé par le fait qu'il consiste à enrouler ladite feuille (2) autour du noyau (119), à amener en recouvrement les parties correspondantes (22, 26) de section en forme de U ou d'Oméga desdites parties d'extrémité de cette feuille et conformées en saillie dans le sens de l'épaisseur de cette dernière et qu'il consiste à faire glisser la feuille ainsi enroulée le long dudit noyau pour engager et faire passer longitudinalement et dans le sens de leur épaisseur ces parties d'extrémité dans l'espace (120) formé entre le rouleau presseur (101) et le noyau (119), cet espace étant tel que lors de ce passage, lesdites parties en saillie s'emboîtent ou s'encastrent les unes dans les autres.

15. Procédé selon la revendication 14, caractérisé par le fait qu'il consiste à faire passer ladite feuille enroulée dans un espace annulaire (120) ménagé entre ledit noyau et des rouleaux disposés à la périphérie de ce dernier.

16. Procédé selon l'une des revendications 14 à 15, caractérisé par le fait qu'il consiste à former au moins une nervure longitudinale s'étendant vers l'extérieur de ladite feuille lorsque cette dernière passe entre les bords adjacents d'au moins deux rouleaux adjacents.

17. Dispositif destiné à la fabrication d'un conteneur tubulaire à partir d'une feuille (2) dont les parties d'extrémité présentent des parties en saillie (22, 26) destinées à s'emboîter ou s'encastrer dans le sens de l'épaisseur de cette feuille, notamment pour la mise en oeuvre du procédé selon l'une quelconque des revendications 14 à 16, comprenant un noyau longitudinal (117) monté en porte-à-faux, des rouleaux (101) dont les axes s'étendent perpendiculairement audit noyau et qui sont situés latéralement et à une distance de ce dernier de manière à former un espace annulaire et des moyens d'entraînement (126) en rotation desdits rouleaux (117), caractérisé par le fait que ledit noyau présente une partie (118), en amont desdits rouleaux, de section constante et une partie aval d'extrémité (119), engagée entre les rouleaux précités, de forme tronconique.

18. Dispositif selon la revendication 17, caractérisé par le fait que ledit noyau (117) est de section polygonale, des rouleaux (101, 102, 105, 106) étant respectivement prévus à distance d'au moins certaines de ses faces.

19. Dispositif selon l'une des revendications 17 et 18, caractérisé par le fait que deux rouleaux adjacents (101, 106) présentent des bords adjacents espacés (109).

20. Dispositif selon l'une quelconque des revendications 17 à 19, caractérisé par le fait qu'il comprend un noyau (117) de section rectangulaire ou carré et quatre rouleaux (101; 102; 105, 106) prévus à distance de ses faces pour ménager un espace annulaire, lesdits moyens d'entraînement (116) entraînant en rotation en sens opposé deux rouleaux opposés (101, 102).

21. Dispositif selon l'une quelconque des revendications 17 à 20, caractérisé par le fait qu'il comprend un tapis d'évacuation s'étendant perpendiculairement audit noyau, sur lequel se dépose le conteneur tubulaire formé.

**Claims**

1. Tubular container (1) especially for growing plants, comprising a sheet (2) folded in such a manner as to form a tube and kept in this shape by virtue of complementary portions which interlock or sit together and which extend along the height of the tube, characterised in that the two circumferential end portions (3, 7) of the said sheet overlap and exhibit, on their faces respectively projecting fixing portions (22, 26) of U- or omega-shaped cross-section which are shaped in the direction of the thickness of the sheet and on the same side, these projecting portions being of complementary shapes and being nested or fitted together, their equivalent flanks being in contact and their axes of symmetry being substantially perpendicular to the wall of the tube.

2. Tubular container according to Claim 1, characterised in that the projecting portions are formed by one rib (or one more than one rib) and one groove (or more than one groove) (22, 26) of corresponding shape and which interlock or fit together.

3. Tubular container according to one of Claims 1 and 2, characterised in that the said projecting portions comprise at least one rib (or more than one rib) and one groove (or more than one groove) (22, 26) which extend longitudinally and interlock or fit together.

4. Tubular container according to any one of the preceding claims, characterised in that the said projecting portions comprise at least one rib (or ribs) and one groove (or grooves) (12, 16) which extend circumferentially and are provided at least at one of the ends of the said tube.

5. Tubular container according to any one of the preceding claims, characterised in that it comprises a multiplicity of inwardly-formed longitudinal ribs (8-11; 22-26) distributed on its periphery.

6. Tubular container according to Claim 5, characterised in that the said longitudinal ribs (22-26) are of U-shaped cross-section.

7. Tubular container according to any one of the preceding claims, characterised in that it comprises, on its lower portion, inwardly-formed projecting portions (17-21), the upper face of which is downwardly and inwardly inclined.

8. Tubular container according to any one of the preceding claims, characterised in that it is of polygonal transverse cross-section, its faces having circumferential ribs (12-16; 17-21) at their ends and longitudinal ribs (22-26).

9. Tubular container according to Claim 8, characterised in that the longitudinal junction zones of the said faces constitute outwardly-formed longitudinal ribs (8-11).

10. Tubular container according to any one of the preceding claims, characterised in that the said end portions of the said sheet extend circumferentially beyond their interlocking projecting portions (22, 26).

11. Plastic sheet intended for making a up tubular container, especially a tubular container according to any one of the preceding claims, exhibiting adjacent longitudinal flat sides (3-7) connected by projecting longitudinal junction ribs (8-11) shaped in the direction of the thickness of the sheet, characterised in that each flat side exhibits at least one projecting longitudinal rib (22-26) and projecting transverse ribs (12-21) at its ends, shaped in the direction of the thickness of the sheet on the opposite side from the said junction ribs, the ribs (16, 21, 26) of one of the end flat sides (3, 7) of the said sheet (2) and the ribs (12, 17, 22) of its other end flat side being of U- or Omega-shaped cross-section, the ribs (16, 21, 26) of one of the said end flat sides (7) complementing the grooves (12, 17, 22) which are determined by the ribs of the other end flat side (3) so as to be able to interlock or fit together, one into the other, when the sheet is folded while forming a tube.

12. Sheet according to Claim 11, characterised in that the longitudinal ribs (22, 26) of the said end flat sides (3, 7) are formed at a certain distance from the longitudinal edges of the latter.

13. Sheet according to Claim 11, characterised in that it is rectangular.

14. Method for forming, from a sheet (2), a tubular container (1) exhibiting circumferential end portions (3, 7) which overlap, in which these portions are passed between a pressure roller (101) and a core (119) for the formation of the tubular container according to any one of the preceding claims, characterised in that it consists in wrapping the said sheet (2) around the core (119), in bringing into overlap the corresponding portions (22, 26) of U- or Omega-shaped cross-section of the said end portions of this sheet which are shaped so as to project in the direction of the thickness of the latter and in that it consists in sliding the sheet thus wrapped along the said core in order for these end portions to engage and pass longitudinally and in the direction of their thickness into the space (120) formed between the pressure roller (101) and the core (119), this space being such that, during this passage, the said projecting portions interlock or fit together, one into the other.

15. Method according to Claim 14, characterised in that it consists in passing the said wrapped sheet into an annular space (120) made between the said core and rollers disposed at the periphery of the latter.

16. Method according to one of Claims 14 to 15, characterised in that it consists in forming at least one longitudinal rib extending outwardly from the said sheet when the latter passes between the adjacent edges of at least two adjacent rollers.

17. Device intended for manufacturing a tubular container from a sheet (2) whose end portions exhibit projecting portions (22, 26) intended to interlock or fit together in the direction of the thickness of this sheet, especially for the implementation of the method according to any one of Claims 14 to 16, comprising an longitudinal core (117) mounted so as to overhang, rollers (101) whose axes extend perpendicularly to the said core and which are located laterally and at a certain distance from the latter in such a manner as to form an annular space and means (126) for rotatably driving the said rollers (117), characterised in that the said core exhibits a portion (118), upstream from the said rollers, of constant cross-section and a downstream end portion (119) engaged between the above-mentioned rollers and of frustoconical shape.

18. Device according to Claim 17, characterised in that the said core (117) is of polygonal cross-section, rollers (101, 102, 105, 106) being respectively provided at a certain distance from at least some of its faces.

19. Device according to one of Claims 17 and 18, characterised in that two adjacent rollers (101, 106) exhibit spaced-apart adjacent edges (109).

20. Device according to any one of Claims 17 to 19, characterised in that it comprises a core (117) of rectangular or square cross-section and four rollers (101, 102, 105, 106) provided at a certain distance from its faces in order to make an annular space, the said drive means (116) rotatably driving two opposite rollers (101, 102) in opposite directions.

21. Device according to either of Claims 17 to 20, characterised in that it comprises a removal conveyor, extending perpendicularly to the said core, onto which the formed tubular container is deposited.

**Patentansprüche**

1. Rohrförmiger Behälter (1), insbesondere für die Pflanzenzucht, mit einer Folie (2), die zu einem Rohr ausgeformt ist und durch in Höhenrichtung des Rohrs verlaufende und sich ineinanderfügende oder ineinander verspannende komplementäre Teile in Form gehalten wird, dadurch gekennzeichnet, daß die beiden an den umfangsseitigen Enden liegenden Teile der Folie einander überdecken und auf ihren Hauptflächen jeweils erhabene Befestigungselemente (22, 26) mit U- oder Ω-förmigem Querschnitt aufweisen, die in Dickenrichtung der Folie ausgeformt sind und sich jeweils auf derselben Seite befinden, und daß diese erhabenen Befestigungselemente komplementäre Formen besitzen und ineinandergefügt oder ineinander verspannt sind, wobei ihre gleichnamigen Flanken miteinander in Kontakt sind und ihre Symmetrieachsen im wesentlichen senkrecht zur Wandung des Rohrs verlaufen.

2. Rohrförmiger Behälter nach Anspruch 1, dadurch gekennzeichnet, daß die erhabenen Befestigungselemente von einer oder mehreren Rippen oder Nuten (22, 26) mit korrespondierender Form gebildet sind und sich ineinanderfügen oder ineinander verspannen.

3. Rohrförmiger Behälter nach einem der Ansprüche 1 und 2, dadurch gekennzeichnet, daß die erhabenen Befestigungselemente wenigstens Rippe(n) und Nut(en) (22, 26) umfassen, die in Längsrichtung verlaufen und sich ineinanderfügen oder ineinander verspannen.

4. Rohrförmiger Behälter nach einem der vorhergehenden Ansprüche, dadurch gekennzeichnet, daß die erhabenen Befestigungselemente wenigstens Rippe(n) und Nut(en) (12, 16) umfassen, die in Umfangsrichtung verlaufen und zumindest in einem der Endbereiche des Rohrs vorgesehen sind.

5. Rohrförmiger Behälter nach einem der vorhergehenden Ansprüche, dadurch gekennzeichnet, daß er eine Mehrzahl von Längsrippen (8-11; 22-26) aufweist, die nach innen ausgeformt und über seinen Umfang verteilt sind.

6. Rohrförmiger Behälter nach Anspruch 5, dadurch gekennzeichnet, daß die Längsrippen (22-26) U-förmigen Querschnitt haben.

7. Rohrförmiger Behälter nach einem der vorhergehenden Ansprüche, dadurch gekennzeichnet, daß er in seinem unteren Bereich erhabene Teile (17-21) aufweist, die nach innen ausgeformt sind und deren Oberseite nach unten und innen geneigt ist.

8. Rohrförmiger Behälter nach einem der vorhergehenden Ansprüche, dadurch gekennzeichnet, daß er polygonalen Querschnitt besitzt und daß seine Seitenflächen in ihren Endbereichen umlaufende Rippen (12-16; 17-21) sowie Längsrippen (22-26) aufweisen.

9. Rohrförmiger Behälter nach Anspruch 8, dadurch gekennzeichnet, daß die längsseitigen Verbindungszonen der Seitenflächen aus Längsrippen (8-11) bestehen, die nach außen ausgeformt sind.

10. Rohrförmiger Behälter nach einem der vorhergehenden Ansprüche, dadurch gekennzeichnet, daß die genannten an dem umfangsseitigen Ende der Folie liegenden Teile über ihre sich ineinanderfügenden erhabenen Befestigungselemente (22, 26) hinausragen.

11. Folie aus Kunststoff für die Herstellung eines rohrförmigen Behälters, insbesondere eines rohrförmigen Behälters nach einem der vorhergehenden Ansprüche, mit nebeneinanderliegenden Längsfeldern (3-7), die durch in Dickenrichtung der Folie ausgeformte, in Längsrichtung verlaufende erhabene Verbindungsrippen (8-11) miteinander verbunden sind, dadurch gekennzeichnet, daß jedes Feld wenigstens eine erhabene Längsrippe (22-26) sowie in seinen Endbereichen erhabene Querrippen (12-21) aufweist, die in Dickenrichtung der Folie auf der der Seite der genannten Verbindungsrippen entgegengesetzten Seite ausgeformt sind, daß die Rippen (16, 21, 26) eines der endseitigen Felder (3,7) der Folie (2) und die Rippen (12, 17, 22) des anderen endseitigen Feldes U- oder Ω-förmigen Querschnitt haben, und daß die Rippen (16, 21, 26) des einen endseitigen Feldes (7) eine zu der Form der von den Rippen des anderen endseitigen Feldes (3) bestimmten Nuten (12, 17, 22) komplementäre Form haben, so daß sie sich ineinanderfügen oder ineinander verspannen können, wenn die Folie gefaltet und zu einem Rohr ausgeformt wird.

12. Folie nach Anspruch 11, dadurch gekennzeichnet, daß die Längsrippen (22, 26) der endseitigen Felder(3,7) im Abstand von deren Längsrändem ausgebildet sind.

13. Folie nach Anspruch 11, dadurch gekennzeichnet, daß sie rechteckig ist.

14. Verfahren zur Herstellung eines rohrförmigen Behälters (1) aus einer Folie (2), deren an den umfangsseitigen Enden liegenden Teile (3, 7) einander überdecken, bei dem man diese Teile zur Ausformung des rohrförmigen Behälter nach einem der vorhergehenden Ansprüche zwischen einer Druckwalze (101) und einem Kern (119) hindurchlaufen läßt, dadurch gekennzeichnet, daß die Folie (2) um den Kern (119) gewickelt wird, daß die korrespondierenden Befestigungselemente (22, 26) mit U- oder Ω-förmigem Querschnitt der an den Enden liegenden Teile der Folie, die in Dickenrichtung der Folie erhaben ausgeformt sind, in Überdeckung gebracht werden, und daß man die so aufgewickelte Folie längs des Kerns gleiten läßt, um die an den Enden liegenden Teile in Längsrichtung und in Dickenrichtung in den zwischen der Druckwalze (101) und dem Kern (119) gebildeten Spalt einzubringen und durch diesen hindurchlaufen zu lassen, wobei dieser Spalt so bemessen ist, daß die genannten erhabenen Befestigungselemente sich bei diesem Durchlauf ineinanderfügen oder ineinander verspannen.

15. Verfahren nach Anspruch 14, dadurch gekennzeichnet, daß man die gewickelte Folie in einen ringförmigen Spalt (120) einlaufen läßt, der zwischen dem Kern und an dessen Peripherie angeordneten Druckwalzen vorgesehen ist.

16. Verfahren nach einem der Ansprüche 14 oder 15, dadurch gekennzeichnet, daß beim Durchlauf der Folie zwischen den benachbarten Rändern wenigstens zweier benachbarter Druckwalzen wenigstens eine von der Folie nach außen ragende Längsrippe ausgebildet wird.

17. Vorrichtung zur Herstellung eines rohrförmigen Behälters aus einer Folie (2), deren an den Enden liegende Teile (3, 7) erhabene Befestigungselemente (22,26) aufweisen, die in Dickenrichtung der Folie ineinanderfügen oder ineinander verspannen können, insbesondere zur Durchführung des Verfahrens nach einem der Ansprüche 14 bis 16, mit einem freitragend montierten in Längsrichtung angeordneten Kern (117), mit Walzen (101), deren Achsen senkrecht zu diesem Kern verlaufen und die seitlich des Kerns und im Abstand von diesem angeordnet sind, so daß sie einen ringförmigen Spalt bilden, sowie mit Antriebsmitteln (126) zum Drehen der Walzen (101), dadurch gekennzeichnet, daß der Kern einen vor den Walzen liegenden vorderen Teil (118) mit konstantem Querschnitt und einen zwischen den Walzen liegenden kegelstumpfförmigen hinteren Endbereich besitzt.

18. Vorrichtung nach Anspruch 17, dadurch gekennzeichnet, daß der Kern (117) polygonalen Querschnitt hat und daß im Abstand von wenigstens einigen seiner Seiten jeweils Walzen (101, 102, 105, 106) angeordnet sind.

19. Vorrichtung nach einem der Ansprüche 17 und 18, dadurch gekennzeichnet, daß die einander benachbarten Ränder zweier benachbarter Walzen (101, 105) Abstand (109) voneinander haben.

20. Vorrichtung nach einem der Ansprüche 17 bis 18, dadurch gekennzeichnet, daß sie einen Kern (117) mit rechteckigem oder quadratischem Querschnitt besitzt sowie vier Walzen (101, 102, 105, 106), die zur Ausbildung eines ringförmigen Spaltes im Abstand von den Seiten des Kerns angeordnet sind, und daß die genannten Antriebsmittel (116) zwei einander gegenüberliegende Walzen (101, 102) zu Drehbewegungen in entgegengesetzten Richtungen antreiben.

21. Vorrichtung nach einem der Ansprüche 17 bis 20, dadurch gekennzeichnet, daß sie ein senkrecht zu dem Kern angeordnetes Austragsförderband aufweist, auf dem der ausgeformte rohrförmige Behälter abgelegt wird.

FIG.1

FIG.2

EP 0 311 519 B1

## FIG.3

## FIG.4

## FIG.5

FIG.6

FIG.7

# FIG.8